# EUROPEAN PATENT SPECIFICATION

(11) **EP 3 855 234 B1**
(45) Date of publication and mention of the grant of the patent: **20.09.2023**
(21) Application number: 19862528.7
(22) Date of filing: 20.09.2019
(51) Int. Cl.: G01N 21/64, G02B 21/36, G02B 21/00, G02B 3/00

(54) **LIGHT-SHEET MICROSCOPE AND METHOD FOR LARGE SAMPLES**
LICHTSCHEIBENMIKROSKOP UND VERFAHREN FÜR GROSSE PROBEN
MICROSCOPE ET PROCÉDÉ COMPRENANT UN FAISCEAU LASER PLAN POUR DES ÉCHANTILLONS DE GRANDE DIMENSION

(30) Priority: 21.09.2018 ES 201830912
(43) Date of publication of application: 28.07.2021
(73) Proprietor: Universidad Carlos III de Madrid, 28919 Leganés - Madrid (ES)
(72) Inventor: RIPOLL LORENZO, Jorge, 28919 Leganés (ES)
(74) Representative: Herrero & Asociados, S.L.
(86) International application number: PCT/ES2019/070629
(87) International publication number: WO 2020/058556

(56) References cited:
- WO-A2-2010/014244
- KR-A- 20110 124 634
- US-A1- 2013 335 818
- US-A1- 2017 003 491
- US-A1- 2018 120 548
- FAHRBACH, F. et al.: "Rapid 3D light-sheet microscopy with a tunable lens", Optics Express, vol. 21, no. 18 30 August 2013 (2013-08-30), pages 21020-21026, XP055089699, [retrieved on 2019-06-06]

## Description

### OBJECT OF THE INVENTION

The present invention relates to the field of microscopy, and more particularly to light sheet fluorescence microscopy used for imaging various transparent or semitransparent samples such as embryos, tissues, and other biological samples.

A first object of the present invention is a new light sheet fluorescence microscope particularly designed to allow 3D imaging of large samples without having to move the sample.

A second object of the present invention is a method for operating the aforementioned new light sheet fluorescence microscope.

### BACKGROUND OF THE INVENTION

Studies of embryos and similar biological samples under optical microscopy present, unlike with individual cells, particular problems related to light absorption and loss of resolution due to light scattering. To solve these problems, major improvements have been made in recent years to light sheet fluorescence microscopes, the invention of which dates back to 1903.

A light sheet fluorescence microscope consists primarily of a camera coupled to a high numerical aperture objective lens and arranged according to a direction called *"detection direction",* and an illumination means capable of emitting a thin sheet of light according to a direction called *"illumination direction"* that is perpendicular to the detection direction, following the original Siedentopf and Zsigmondy configuration coupled to a detection camera. With this configuration, the camera may obtain a 2D fluorescence image of the portion of the sample illuminated by the illumination sheet or plane. If the sample is also moved in the direction of the axis of detection and multiple 2D images are taken at different positions, a set or stack of 2D images is generated wherein each of the 2D images corresponds to a position of the illumination plane relative to the sample. This stack of 2D images contains information about the position in z (depth of the sample according to the direction of detection) obtained when moving the sample, and the positions x and y, present in each 2D image. The 2D image stack may then be merged to generate a 3D image of the sample, as described in US 7,554,725 to Stelzer et al. Subsequently, it was proposed to rotate the sample around its own axis, normally vertical, to capture several stacks of 2D images (commonly referred to as "angular measurements") and subsequently merging them, allowing for improved anisotropy and image quality (S. Preibisch et al, Nature Methods 7 (2010)).

Since 2015, the inventors of the present application have filed several patent applications aimed at various improvements in these types of microscopes. These patent applications are the following:
PCT/ES2015/070455 entitled *"Microscope and method for 3D imaging* of a *sample collection",* which describes a new microscope combining the SPIM (Selective Plane Illumination Microscope) type light-sheet technique with the Optical Projection Tomography (OPT) technique.
PCT/ES2016/070714, entitled *"Multi-loading device for flat laser beam microscope"* which describes a multi-loading device for supplying a flat laser beam microscope with a continuous and sequential flow of samples.
PCT/ES2017/070028, entitled *"Automatic objective lens shifting device for* a *planar laser beam microscope",* which describes a device which allows automatically shifting the imaging objective lens of a planar laser beam microscope based on the desired magnification at any given time.
PCT/ES2017/070028, entitled *"Rotary objective lens shifting device for planar laser beam microscope",* which describes a device where the objective lens shifting is performed through rotations of the tray itself.
PCT/ES2017/070184 entitled "Sample-holding device for a microscope", which describes a device for mounting samples and measuring them on flat laser beam equipment.

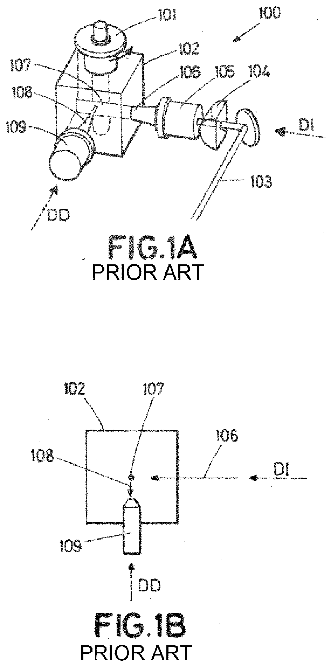

For a clearer understanding of this technique, Figs. 1a and 1b showing a first example of a flat laser beam microscope (100) are attached. The sample (107) is arranged on a support (101) within a tray (102) filled with a liquid. A Gaussian, Bessel, Airy, or similar linear illumination beam (103) meets a cylindrical lens (104) that focuses it thanks to an illumination objective lens (105) to generate the vertical flat illumination sheet (106). This vertical flat illumination sheet (106) meets the sample (107) according to the direction of illumination (DI), and the fluorescent light (108) emitted by that particular plane of the sample (107) is collected by a sensing objective lens (109) oriented according to the direction of detection (DD), which is perpendicular to the direction of illumination (DI). The support (101) may rotate about its vertical axis to allow various angular measurements to be taken according to the technique proposed by Preibisch.

In 2013, the article by F. O. Farbach et al entitled "Rapid 3D light-sheet microscopy with a tuneable lens", Optics Express, Vol. 21, Issue 18, pp. 21020-21026 described an improvement of this technique by introducing a tuneable lens in order to avoid the need to move the sample or objective lens to focus the obtained 2D image as the laser beam travels along the detection direction.

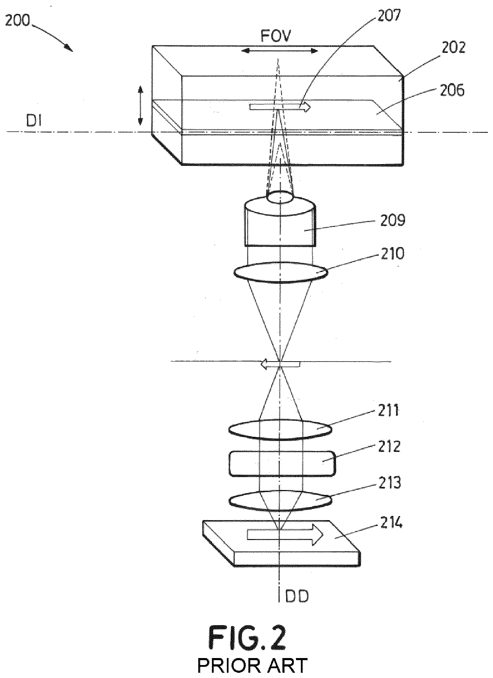

For a clearer understanding of this configuration, Fig. 2 shows a second example of a light sheet microscope (200) according to the prior art provided with a tuneable lens (212) where similar reference numbers have been assigned to parts equivalent to those shown in Figs. 1a and 1b. In Fig. 2, the tray assembly (202) and light sheet beam (206) have been schematically drawn, although it should be assumed to include all elements shown in Figs. 1a and 1b. The objective lens (209) has an electrically tuneable lens (ETL) that receives the light emitted by the sample (207) along the direction of detection (DD) and transmits it along a set of lenses designed to focus the image of the sample (207) on the sensor (214) of a camera. Specifically, first and second lenses (210, 211) transmit the sample image (207) to the tuneable lens (212). The tuneable lens (212) has the feature of allowing modification of its focal length such that the image of the sample (207) may be suitably focused regardless of the specific position of the light sheet beam (206) at any given time. A third lens (213) transmits the already focused image to the sensor (214) of the camera again, where the image is finally captured

However, despite these and other improvements, the need to physically move the tray (202) when the size thereof is larger than the field of view (FOV) of the ETL lens present in the objective lens (209) remains an inconvenience. In the example shown in Fig. 2, assuming that the sample has a size in the plane perpendicular to the direction of detection (DD) of 1 cm × 1 cm and a 10x objective lens (209) with a field of view of 1 mm × 1 mm is used, it would be necessary to move the tray (202) 100 times with the sample (207). Since each movement takes at least 2 seconds, it can be seen how long it takes to obtain the 3D image of a sample of this size.

A further prior art US2017003491 A1 discloses a microscope using a microlens array.

### DESCRIPTION OF THE INVENTION

The present invention solves the above problem by replacing the single lens used so far with a lens array capable of covering the entire sample. A selection mechanism based on the use of galvanometric mirrors allows transmitting the sub-image obtained by an individual lens, from among the plurality of lenses of the array, to the optical system that constructs the image of the sample. In this way, it is possible to perform a laser scan for each of the lenses of the lens array and thus construct a complete image of the sample, even when it is very large, from the plurality of sub-images obtained.

A first aspect of the present invention is directed to a light sheet fluorescence microscope for large samples. The microscope comprises a tray configured to house a sample, a laser emitter configured to emit a light sheet beam along an illumination direction, and an optical assembly arranged along a direction of detection perpendicular to the light sheet beam configured to receive fluorescence emission from the sample caused by said light sheet beam. So far, these are the elements that a conventional light sheet fluorescence microscope includes. Although each of these elements is not specifically described, it should be understood that the microscope of the present invention includes all the elements described in the "Background of the invention" section, in particular those elements mentioned in Figs. 1 and 2, unless explicitly stated otherwise or clearly deduced from the context at all times.

The microscope of the present invention differs primarily from the prior art in the configuration of the optical assembly, which in this case comprises a lens array, a tube lens, a set of galvanometric mirrors, and a focusing unit. Each of these elements is described in more detail below.
a) Lens array
   It is a lens array where each lens has a field of view substantially smaller than the size of the tray and an axis parallel to the direction of detection. This lens array is positioned adjacent to a face of the tray.
   That is, the total field of view of the lens array will be the sum of the fields of view of each of the individual lenses. This allows the field of view of the microscope to be increased indefinitely, as it is sufficient to add more lenses to the array to cover arbitrarily larger trays. For example, a 5×5 cm array consisting of 250×250 individual lenses with focal lengths between 1 mm and 100 mm may be used. In this ways a field of vision of almost 5×5 cm would be obtained. Typically, the field of view of the lens array will cover the entire face of the tray next to which it is arranged, thus allowing 3D images to be obtained from any sample that is introduced into the tray.
   This contrasts with the use of a single individual lens described in prior art microscopes, whose field of view is limited by various technical considerations. Conventional microscopes generally use lenses (or objective lenses) called *"working distance (WD) lenses",* which have a small numerical aperture. As indicated in the preceding paragraph, this would be a 10x objective lens with a field of view of 1×1 mm.
b) Tube lens
   It is a tube lens that has an axis parallel to the direction of detection and whose field of view covers several lenses of the lens array, preferably all the lenses of the lens array. That is, the sub-image obtained by any of the lenses of the lens array is received and magnified by the tube lens.
   The tube lens magnifies the sub-image obtained by each individual lens in the lens array to a magnification comparable to that of the working distance objective lens. For example, if each lens in the lens array has a focal length of 2 mm, a 200 mm tube lens would result in 10x magnification, similar to that of a conventional working distance objective lens.
c) Set of galvanometric mirrors
   The set of galvanometric mirrors is configured to receive from the tube lens a sub-image of the sample corresponding to a lens selected from the lens array and to transmit said sub-image of the sample to a focusing unit.
   Thus, the set of galvanometric mirrors is configurable to receive from the tube lens only that light having a certain direction and/or position. Indeed, the fluorescent light collected by each individual lens meets the tube lens, according to the direction of detection, at a certain point of said tube lens. As a result, the tube lens transmits the fluorescent light transmitted by each individual lens in a different direction. The set of galvanometric mirrors is configured to discriminate the fluorescent light received from the tube lens based on the direction from which it comes, allowing selecting only the fluorescent light, i.e., the sub-image coming from a certain selected individual lens.
   Ultimately, the set of galvanometric mirrors allows selecting the sub-image captured by a certain lens from among the plurality of lenses of the array and sending said sub-image to the focusing unit.
d) Focusing unit
   The focusing unit is configured to focus the sub-image of the sample on a camera sensor. The focusing unit can be configured in different ways provided that it is capable of receiving the sub-image sent by the set of galvanometric mirrors and focusing it on a camera sensor where the image is formed. For example, in a preferred embodiment of the invention, the focusing unit comprises a first transmission lens that receives, from the set of galvanometric mirrors, the sub-image of the sample and transmits it to a tuneable lens, the tuneable lens that focuses said sub-image, and a second transmission lens that receives, from the tuneable lens, said focused sub-image and transmits it to the camera sensor.
   The tuneable lens may be an electrically tuneable lens, or ETL lens, capable of modifying the focal distance based on the applied voltage.

Thanks to this configuration, it is possible to successively select several lenses from the lens array using the set of galvanometric mirrors and, by scanning the sample using the light sheet beam for each of these lenses, a complete 3D image of the sample housed in the tray is constructed. This process will become clearer from the description of the method of the invention described herein below.

In a further preferred embodiment of the invention, the microscope further comprises, between the focusing unit and the camera sensor, a spatial light modulation unit configured to correct spherical aberrations of the sample sub-image. The modulation unit may in principle have any configuration provided that it can receive the sub-image transmitted by the focusing unit and correct any aberration it may have.

In a particularly preferred embodiment of the invention, the spatial light modulation unit comprises a third transmission lens that receives, from the second transmission lens, the sub-image of the sample and transmits it to a spatial light modulator, the spatial light modulator that corrects spherical aberrations of the sub-image, and a fourth transmission lens that receives, from the spatial light modulator, the sub-image with the spherical aberrations corrected and transmits it to the camera sensor. In this context, a spatial light modulator is a device that allows controlling the intensity, phase, or polarisation state of light based on the time and space of the beam meeting said device. They can be of the electro-optical (Kerr effect and Pockels effect), magneto-optical (Faraday effect), mechanical (mirrors), acoustic-optical, or liquid crystal type.

In another preferred embodiment of the invention, the microscope further comprises a dichroic mirror arranged behind the tuneable lens and configured to introduce an external laser beam which meets the sample following an optical path inverse to that followed by the sub-image of the sample. That is, the external laser beam meets the dichroic mirror and is oriented along the optical path formed by the tuneable lens, the first transmission lens, the set of galvanometric mirrors, the tube lens, the lens selected from the lens array, and finally reaches the sample. This configuration allows the introduction of the external laser beam in order for it to interact with the sample, for example to burn areas of the sample or perform *photobleaching* or *photoactivation.* The dichroic mirror, of course, while allowing the introduction of external laser beam allows sub-images from the sample to continue their way through the second transmission lens until they reach the camera sensor. The normal operation of the microscope is therefore unaffected by the arrangement of the dichroic mirror.

In a particularly preferred embodiment, the microscope further comprises an external laser beam source oriented to a second set of galvanometric mirrors that direct said pulsed laser beam to the dichroic mirror.

A second aspect of the present invention is directed to a method for imaging large samples using the light sheet fluorescence microscope described in the preceding paragraphs. This method comprises performing the following steps for each lens in the lens array:
1) Configuring the set of galvanometric mirrors to transmit to the focusing unit a sub-image of the sample collected by a selected lens. That is, in this step the set of galvanometric mirrors is arranged so that it receives only the light from the tube lens, that is, the sub-image, transmitted by a particular lens from among the lens array.
2) Scanning the sample using the light sheet beam to obtain a partial 3D sub-image from a portion of the sample located within the field of view of the selected lens. In this context, the scanning of the sample using the light sheet beam comprises, in turn, the following steps:
   - Emitting a light sheet beam at a selected position along the illumination direction.
   - Transmitting to the focusing unit, using the set of galvanometric mirrors, the sub-image of the sample collected by the selected lens.
   - Focusing the sub-image using the focusing unit and transmitting it to a camera sensor.
   - Repeating these operations for a plurality of positions of the light sheet beam so that they cover the entire sample.
3) Constructing a complete 3D image of the sample by combining the plurality of partial 3D sub-images obtained by each lens. Each of the partial 3D sub-images covers a portion of the sample corresponding to the field of view of each individual lens of the array. These 3D sub-images can be merged to obtain a complete 3D image of the sample in its entirety.

In a particularly preferred embodiment of the invention, the method further comprises the step of correcting spherical aberrations of each focused sub-image by means of a spatial light modulation unit.

In another particularly preferred embodiment of the invention, the method further comprises the step of introducing an external laser beam which meets the sample following an optical path inverse to that followed by the sub-image of the sample.

In this context, note that the construction of the complete 3D image of the sample can be performed by first constructing the 3D image of each sample portion corresponding to each lens, and then combining the set of 3D images obtained. Alternatively, it would be possible to combine all the flat sub-images obtained by the lenses for each specific position of the light sheet beam, thus obtaining complete flat images of the sample, and then stacking all those flat images to form the complete 3D image of the sample. In either case, the end result is obtaining the full 3D image of the large sample much faster than using the existing microscopes.

### BRIEF DESCRIPTION OF THE DRAWINGS

Fig. 1 show two views of the measuring area of a conventional light sheet fluorescence microscope.
Fig. 2 shows a diagram showing the treatment of the acquired image from the objective lens to the camera sensor under a conventional laser beam microscope.
Figs. 3a and 3b schematically show the configuration of a microscope according to the present invention.
Figs. 4a and 4b schematically show how a particular lens is selected from the lens array in a microscope according to the present invention.
Figs. 5a and 5b schematically show how a light sheet beam scan is performed for a particular lens in a microscope according to the present invention.
Fig. 6 schematically shows the arrangement of a spatial modulation unit in a microscope according to the present invention.
Fig. 7 schematically shows the arrangement of a dichroic mirror for introducing an external laser beam in a microscope according to the present invention.

### PREFERRED EMBODIMENT OF THE INVENTION

The microscope (1) of the present invention is described below with reference to the accompanying drawings.

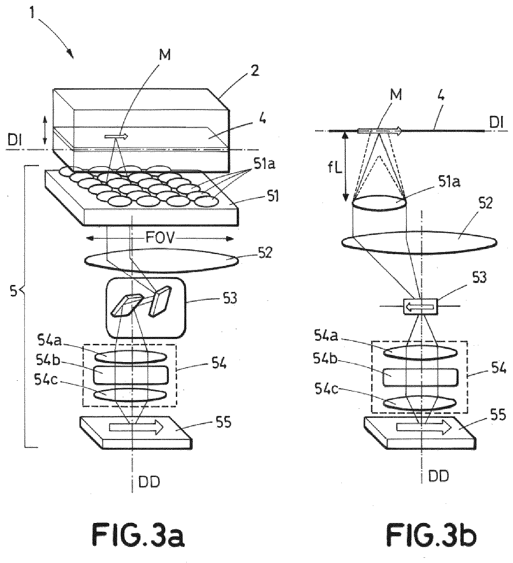

Figs. 3 show schematic views of the microscope (1) of the present invention where the different elements that make it up can be seen. The microscope (1) has a tray (2) in which the sample (M) is located. An emitter emits a light sheet beam (4) according to a direction of illumination, the light sheet beam (4) being perpendicular to the direction of detection (DD) according to which fluorescent light emitted by the sample portion (M) illuminated by said light sheet beam (4) is detected. In this example, the portion of sample (M) illuminated by the light sheet beam (4) is represented by simple figures such as arrows or stars. Although the detection area of the microscope (1) is not shown in detail in these figures, it is understood that the microscope will have all elements common in the prior art described in connection with Fig. 1, unless the context clearly indicates otherwise. The fluorescent light emitted by the sample (M) is received by an optical assembly (5) arranged essentially along the direction of detection (DD).

The optical assembly (5) of this microscope example (1) has a lens array (51) arranged parallel to a face of the tray (4), in this case the lower face. The lens array (51) comprises a plurality of lenses (51a) having an axis parallel to the direction of detection (DD). In this simplified example, the array (51) has 24 lenses (51a), although the number of lenses (51a) may be increased indefinitely such that the overall field of view of the lens array (51) may be arbitrarily widened to cover very large trays (4) housing very large samples (M). The lenses (51a) of the lens array (51) have the focal distance (fL) matching the distance between the lens (51a) and the light sheet beam (4) at each moment.

Following the direction of detection (DD) in the opposite direction to the position of the tray (2), the optical assembly (5) comprises a tube lens (52) located adjacent to the lens array (51) and whose field of view (FOV) covers the entire lens array (51). Thus, when a sample portion (M) illuminated by the light sheet beam (4) emits a fluorescent light, or sub-image of the sample (M), it is received by the lenses (51a) of the array (51) and transmitted, according to the direction of detection (DD), to a certain point of the tube lens (52). On the other side of the tube lens (52), the optical assembly (5) comprises a set (53) of galvanometric mirrors that are configured to receive and transmit to the next element, the focusing unit (54), only light received from a certain direction. Since the fluorescent light transmitted to the tube lens (52) by each lens (51a) meets a different position of said tube lens (52), the exit direction of the tube lens (52) of the sub-image corresponding to each lens (51a) follows a different direction. In this way, by acting appropriately on the set (53) of galvanometric mirrors, it is possible to choose to receive the sub-image of a particular lens (51a) from among the plurality of lenses (51a) of the array (51). This has been represented in a simplified manner in Fig. 3b, wherein the lens array (51) has been removed and only the specific lens (51a) whose sub-image is received by the set (53) of galvanometric mirrors and transmitted to the focusing unit (54) is represented.

The focusing unit (54) thus receives only the sub-image of a particular lens (51a) and suitably focuses it on a camera sensor (55), e.g., a CMOS camera. To do this, the focusing unit (54) is provided with a first transmission lens (54a) that receives from the set (53) of galvanometric mirrors the sub-image of the sample (M) and transmits it to a tuneable lens (54b), the tuneable lens (54b) that focuses said sub-image, and a second transmission lens (54c) that receives from the tuneable lens (54b) said focused sub-image and finally transmits it to the camera sensor (55). The tuneable lens (54b) may be any lens whose focal length can be quickly modified, e.g., an electrically tuneable lens (ETL).

Thanks to this configuration, the process to construct a complete 3D image of a very large sample (M) would basically be the following. First, the set (53) of galvanometric mirrors is configured to receive fluorescent light transmitted through the tube lens (52) by a certain lens (51a) in particular from among the lens array (51). The sample is then scanned using the light sheet beam (4) and a first stack of sub-images corresponding to the sample portion (M) located in the field of view of said particular lens (51a) is received. Each of these sub-images will follow the path described above passing through the tube lens (52), the set (53) of galvanometric mirrors, and the focusing unit (54), until reaching the camera sensor (55). The acquired sub-images may then be combined to form a stack of sub-images forming a 3D image of said sample portion (M). The configuration of the set (53) of galvanometric mirrors is then modified to receive fluorescent light emitted by a subsequent particular lens (51a) and the operation is repeated. This process continues until corresponding sub-image stacks have been received for each of the lenses (51a) of the lens array (51). It is then possible to combine all sub-images to form a 3D image of the complete sample (M).

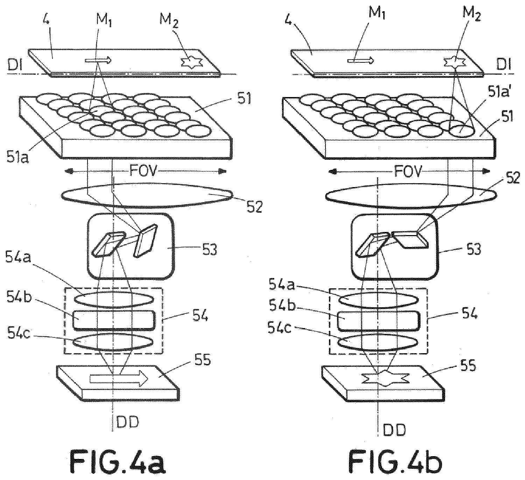

Figs. 4a and 4b show respectively two moments of this process of acquiring sub-images corresponding to two particular lenses (51a, 51a') of the lens array (51). Specifically, Fig. 4a shows a schematic view of the microscope (1) of the invention wherein the set (53) of galvanometric mirrors is configured to receive only the sub-images received from a particular lens (51a) located in the third row, second column of the lens array (51). In this simplified example, the sub-image captured by the lens (51a) takes the form of an arrow (M₁). Once the scanning of the light sheet beam (4) has been performed and the plurality of sub-images necessary for forming the 3D image corresponding to that specific portion of the sample (M) have been acquired, the configuration of the set (53) of galvanometric mirrors is modified to receive only the sub-images transmitted by a second lens (51a') different from the previous one, in this case the lens (51a') located in the sixth row, fourth column. In this simplified example, the sub-image captured by the second lens (51a') takes the form of a star (M₂). With the microscope (1) in this second configuration, shown in Fig. 4b, another scan of the light sheet beam (4) is performed and the sub-images necessary for the formation of the 3D image corresponding to this specific second portion of the sample (M) are acquired. This process is repeated for each of the lenses (51a) of the array (51).

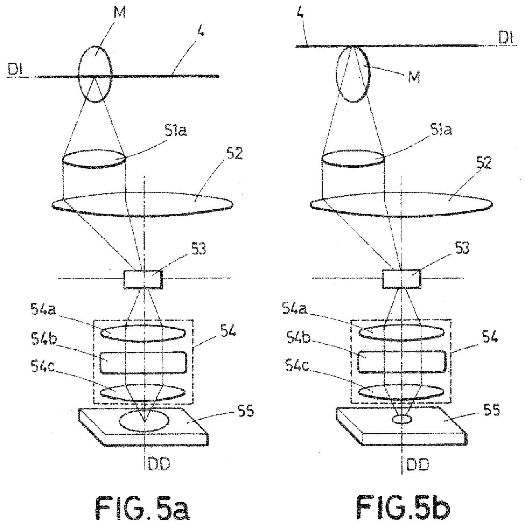

Figs. 5a and 5b show respectively two moments of this process of scanning of the light sheet beam (4) for a particular lens (51a) of the lens array (51). Throughout the scanning process, the set (53) of galvanometric mirrors remains in the same position, so that it receives only the sub-images transmitted by a certain particular lens (51a). As described above, these sub-images are then focused by the focusing unit (54) and captured by the camera sensor (55). Fig. 5a shows a moment in this process when the light sheet beam (4) adopts a certain first position where it cuts an essentially egg-shaped sample (M) approximately in half. As can be seen, a flat sub-image corresponding to approximately one circumference is received in the camera sensor (55). Fig. 5b shows another moment of this process when the light sheet beam (4) adopts a second position where it cuts the sample (M) near one of its ends. In this second case, a flat sub-image corresponding to approximately one circumference of a slightly lesser radius is received in the camera sensor (55). The complete scanning of the sample (M) is essentially similar to the operation of a conventional light sheet fluorescence microscope, and allows forming a 3D image of the sample portion (M) located in the field of view of the specific lens (51a).

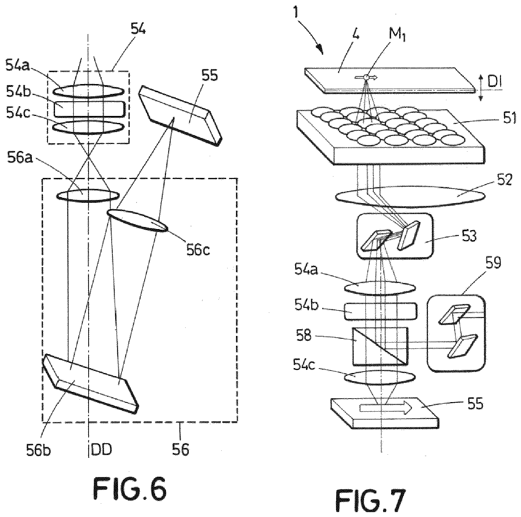

Fig. 6 schematically shows a spatial light modulation unit (56) configured to correct spherical aberrations in the sub-image of the sample (M) that is located between the focusing unit (54) and the camera sensor (55). More specifically, the spatial light modulation unit (56) comprises a third transmission lens (56a) that receives from the second transmission lens (54c) the sub-image of the sample (M) and transmits it to a spatial light modulator (56b), the spatial light modulator (56b) that corrects spherical aberrations of the sub-image, and a fourth transmission lens (56c) that receives, from the spatial light modulator (56b), the sub-image with the spherical aberrations corrected and transmits it to the camera sensor (55).

Fig. 7 shows another microscope configuration (1) according to the present invention including all elements of the microscope (1) shown in Figs. 3 to 5 and which is further provided with a dichroic mirror (58) to allow the introduction of an external laser beam directed towards the sample (M). In this way, if necessary, it is possible to act on the sample (M), for example, to burn areas of it, perform *photobleaching* or *photoactivation.* In this example, an external laser beam source (not shown) emits a laser beam in the direction of a second set of galvanometric mirrors (59), which direct said laser beam toward the dichroic mirror (58). The dichroic mirror (58) is arranged in the optical path followed by sub-images of the sample between the tuneable lens (54b) and the second transmission lens (54c). In this way, a suitable configuration of the dichroic mirror (58) allows the external laser beam from the second set of galvanometric mirrors (59) to be directed along the path followed by the sub-images of the sample (M), so that said external laser beam travels in the opposite direction until it meets the sample (M). The dichroic mirror (58), at the same time, continues to allow the sub-images of the sample to continue their path through the second transmission lens (54c) until they reach the camera sensor (55).

## Claims

1. A light sheet fluorescence microscope (1) for large samples comprising a tray (2) configured to house a sample (M), a laser emitter configured to emit a light sheet beam (4) along a direction of illumination (DI), and an optical assembly (5) arranged along a direction of detection (DD) perpendicular to the light sheet beam (4) configured to receive fluorescence emission from the sample (M) caused by said light sheet beam (4), **characterised in that** the optical assemble comprises:
a lens array (51), wherein each lens (51a) has a field of view substantially smaller than the size of the tray (2) and an axis parallel to the direction of detection (DD), and wherein the lens array (51) is located adjacent to a face of the tray (2);
a tube lens (52) with an axis parallel to the direction of detection (DD) and whose field of view (FOV) covers several lenses (51a) of the lens array (51);
a set (53) of galvanometric mirrors configured to receive, from the tube lens (52), a sub-image of the sample (M) corresponding to a lens (51a) selected from the lens array (51) and to transmit said sub-image of the sample (M) to a focusing unit (54); and
the focusing unit (54) configured to focus the sub-image of the sample (M) on a camera sensor (55),
such that successively selecting several lenses (51a) from the lens array (51) using the set (53) of galvanometric mirrors and, by scanning the sample (M) using the light sheet beam (4) for each of these lenses (51a), a complete 3D image of the sample (M) housed in the tray (2) is constructed.

2. The light sheet fluorescence microscope (1) according to claim 1, wherein the focusing unit (54) comprises a first transmission lens (54a) that receives, from the set (53) of galvanometric mirrors, the sub-image of the sample (M) and transmits it to a tuneable lens (54b), the tuneable lens (54b) that focuses said sub-image, and a second transmission lens (54c) that receives from the tuneable lens (54b) said focused sub-image and transmits it to the camera sensor (55).

3. The light sheet fluorescence microscope (1) according to any one of the preceding claims further comprising, between the focusing unit (54) and the camera sensor (55), a spatial light modulation unit (56) configured to correct spherical aberrations of the sub-image of the sample (M).

4. The light sheet fluorescence microscope (1) according to claim 3, wherein the spatial light modulation unit (56) comprises a third transmission lens (56a) that receives from the second transmission lens (54c) the sub-image of the sample (M) and transmits it to a spatial light modulator (56b), the spatial light modulator (56b) that corrects spherical aberrations of the sub-image, and a fourth transmission lens (56c) that receives from the spatial light modulator (56b) the sub-image with the spherical aberrations corrected and transmits it to the camera sensor (55).

5. The light sheet fluorescence microscope (1) according to any one of the preceding claims further comprising a dichroic mirror (58) arranged behind the tuneable lens (54b) and configured to introduce an external laser beam which meets the sample (M) following an optical path inverse to that followed by the sub-image of the sample (M).

6. The light sheet fluorescence microscope (1) according to claim 5 further comprising an external laser beam source oriented to a second set of galvanometric mirrors (59) that direct said pulsed laser beam to the dichroic mirror (58).

7. A method for imaging large samples using the light sheet fluorescence microscope (1) of any one of claims 1-2, **characterised in that** it comprises performing the following steps for each lens of the lens array (51):
- configuring the set (53) of galvanometric mirrors to transmit to the focusing unit (54) a sub-image of the sample (M) collected by a selected lens (51a);
- scanning the sample (M) using the light sheet beam (4) to obtain a partial 3D sub-image of a portion of the sample (M) located within the field of view (FOV) of the selected lens (51a); and
- constructing a complete 3D image of the sample (M) by combining the plurality of partial 3D sub-images obtained by each lens (51a),
wherein the scanning of the sample (M) using the light sheet beam comprises, in turn, the following steps:
- emitting a light sheet beam (4) at a selected position along the direction of illumination (DI);
- transmitting to the focusing unit (54), using the set (53) of galvanometric mirrors, the sub-image of the sample (M) collected by the selected lens;
- focusing the sub-image using the focusing unit (54) and transmitting it to a camera sensor (55);
- repeating these operations for a plurality of positions of the light sheet beam (4) so that they cover the entire sample (M).

8. The method for imaging large samples according to claim 7 further comprising the step of correcting aberrations of each focused sub-image of the sample (M) by means of a spatial light modulation unit (56).

9. The method for imaging large samples according to any one of claims 7-8 further comprising the step of introducing an external laser beam which meets the sample (M) following an optical path inverse to that followed by the sub-image of the sample (M).

## Patentansprüche

1. Lichtscheibenfluoreszenzmikroskop (1) für große Proben, umfassend eine Schale (2), die zur Aufnahme einer Probe (M) konfiguriert ist, einen Laseremitter, der zur Emission eines Lichtscheibenstrahls (4) entlang einer Beleuchtungsrichtung (DI) konfiguriert ist, und eine optische Anordnung (5), die entlang einer Nachweisrichtung (DD) senkrecht zu dem Lichtscheibenstrahl (4) angeordnet ist und konfiguriert ist, um Fluoreszenzemission von der Probe (M) zu empfangen, die durch den Lichtscheibenstrahl (4) verursacht wird, **dadurch gekennzeichnet, dass** die optische Anordnung folgendes umfasst:
eine Linsenanordnung (51), wobei jede Linse (51a) ein Sichtfeld hat, das im Wesentlichen kleiner als die Größe der Schale (2) ist und eine Achse parallel zur Nachweisrichtung (DD) aufweist, und wobei die Linsenanordnung (51) neben einer Fläche der Schale (2) angeordnet ist,
eine Tubuslinse (52) mit einer Achse parallel zur Nachweisrichtung (DD), deren Sichtfeld (FOV) mehrere Linsen (51a) des Linsenarrays (51) abdeckt;
einen Satz (53) von galvanometrischen Spiegeln, die so konfiguriert sind, dass sie von der Tubuslinse (52) ein Teilbild der Probe (M) empfangen, das einer aus der Linsenanordnung (51) ausgewählten Linse (51a) entspricht, und an eine Fokussiereinheit zu übertragen (54); und
die Fokussiereinheit (54) so konfiguriert ist, dass sie das Teilbild der Probe (M) auf einen Kamerasensor (55) fokussiert,
so dass unter aufeinanderfolgender Auswahl mehrerer Linsen (51a) aus dem Linsenfeld (51) mit Hilfe des Satzes (53) galvanometrischer Spiegel und durch Abtasten der Probe (M) mit Hilfe des Lichtscheibenstrahls (4) für jede dieser Linsen (51a) ein vollständiges 3D-Bild der in der Schale (2) befindlichen Probe (M) erstellt wird.

2. Lichtscheibenfluoreszenzmikroskop (1) nach Anspruch 1, wobei die Fokussiereinheit (54) eine erste Transmissionslinse (54a), die vom Satz (53) von galvanometrischen Spiegeln das Teilbild der Probe (M) erhält und es auf eine abstimmbare Linse (54b) überträgt, wobei die abstimmbare Linse (54b) das Teilbild fokussiert, und eine zweite Übertragungslinse (54c), die von der abstimmbaren Linse (54b) das fokussiertes Teilbild erhält und es an den Kamerasensor (55) überträgt, umfasst.

3. Lichtscheibenfluoreszenzmikroskop (1) nach einem der vorhergehenden Ansprüche, das ferner zwischen der Fokussiereinheit (54) und dem Kamerasensor (55) eine räumliche Lichtmodulationseinheit (56) umfasst, die so konfiguriert ist, dass sie sphärische Aberrationen des Teilbilds der Probe (M) korrigiert.

4. Lichtscheibenfluoreszenzmikroskop (1) nach Anspruch 3, wobei die räumliche Lichtmodulationseinheit (56) eine dritte Transmissionslinse (56a) umfasst, die von der zweiten Transmissionslinse (54c) das Teilbild der Probe (M) empfängt und es an einen räumlichen Lichtmodulator (56b) weiterleitet, wobei der räumliche Lichtmodulator (56b) sphärische Aberrationen des Teilbildes korrigiert, und eine vierte Übertragungslinse (56c), die von dem räumlichen Lichtmodulator (56b) das Teilbild mit den korrigierten sphärischen Aberrationen empfängt und es an den Kamerasensor (55) überträgt.

5. Lichtscheibenfluoreszenzmikroskop (1) nach einem der vorhergehenden Ansprüche, das ferner einen dichroitischen Spiegel (58) umfasst, der hinter der abstimmbaren Linse (54b) angeordnet und so konfiguriert ist, dass er einen externen Laserstrahl einleitet, der auf die Probe (M) trifft und dabei einem optischen Weg folgt, der zu demjenigen, dem das Teilbild der Probe (M) folgt, umgekehrt ist.

6. Lichtscheibenfluoreszenzmikroskop (1) nach Anspruch 5, ferner umfassend eine externe Laserstrahlquelle, die auf einen zweiten Satz von galvanometrischen Spiegeln (59) ausgerichtet ist, die den gepulsten Laserstrahl auf den dichroitischen Spiegel (58) richten.

7. Verfahren zur Abbildung großer Proben unter Verwendung des Lichtscheibenfluoreszenzmikroskops (1) nach einem der Ansprüche 1-2, **dadurch gekennzeichnet, dass** es die Durchführung folgender Schritte für jede Linse der Linsenanordnung (51) umfasst:
- Konfigurieren des Satzes (53) von galvanometrischen Spiegeln, um ein Teilbild der Probe (M), das von einem ausgewählten Objektiv (51a) aufgenommen wurde, an die Fokussiereinheit (54) zu übertragen;
- Abtasten der Probe (M) mit dem Lichtscheibenstrahl (4), um ein partielles 3D-Teilbild eines Teils der Probe (M) zu erhalten, der sich innerhalb des Sichtfelds (FOV) der ausgewählten Linse (51a) befindet; und
- Konstruieren eines vollständigen 3D-Bildes der Probe (M) durch Kombinieren der Mehrzahl von 3D-Teilbildern, die von jeder Linse (51a) erhalten wurden,
wobei das Abtasten der Probe (M) unter Verwendung des Lichtscheibenstrahls wiederum die folgenden Schritte umfasst:
- Aussenden eines Lichtscheibenstrahls (4) an einer ausgewählten Position entlang der Beleuchtungsrichtung (DI);
- Übertragung des durch das ausgewählte Objektiv aufgenommenen Teilbildes der Probe (M) an die Fokussiereinheit (54) unter Verwendung des Satzes (53) von galvanometrischen Spiegeln,
- Fokussierung des Teilbildes mit Hilfe der Fokussiereinheit (54) und Übermittlung an einen Kamerasensor (55);
- Wiederholung dieser Vorgänge für eine Vielzahl von Positionen des Lichtscheibenstrahls (4), so dass sie die gesamte Probe (M) abdecken.

8. Verfahren zur Abbildung großer Proben nach Anspruch 7, ferner umfassend den Schritt der Korrektur von Aberrationen jedes fokussierten Teilbildes der Probe (M) mit Hilfe von einer Einheit zur räumlichen Lichtmodulation (56).

9. Verfahren zur Abbildung großer Proben nach einem der Ansprüche 7-8 ferner umfassend den Schritt der Einführung eines externen Laserstrahls, der auf die Probe (M) trifft, einem optischen Weg folgend, der dem entgegengesetzt ist, dem das Teilbild der Probe (M) folgt.

## Revendications

1. Microscope (1) à fluorescence comprenant un faisceau laser plan pour des échantillons de grande dimension comprenant un caisson (2) configuré pour loger un échantillon (M), un émetteur laser configuré pour émettre un faisceau laser plan (4) le long d'une direction d'éclairage (DI), et un ensemble optique (5) disposé le long d'une direction de détection (DD) perpendiculaire au faisceau laser plan (4) configuré pour recevoir une émission de fluorescence en provenance de l'échantillon (M) provoquée par ledit faisceau laser plan (4), **caractérisé en ce que** l'ensemble optique comprend :
un réseau (51) de lentilles, dans lequel chaque lentille (51a) a un champ de vision sensiblement plus réduit que la taille du caisson (2) et un axe parallèle à la direction de détection (DD), et dans lequel le réseau (51) de lentilles est situé adjacent à une face du caisson (2) ;
une lentille de tube (52) avec un axe parallèle à la direction de détection (DD) et dont le champ de vision (FOV) couvre plusieurs lentilles (51a) du réseau (51) de lentilles ;
un ensemble (53) de miroirs galvanométriques configurés pour recevoir, en provenance de la lentille de tube (52), une sous-image de l'échantillon (M) correspondant à une lentille (51a) sélectionnée à partir du réseau (51) de lentilles et pour transmettre ladite sous-image de l'échantillon (M) à une unité (54) de focalisation ; et
l'unité (54) de focalisation configurée pour focaliser la sous-image de l'échantillon (M) sur un capteur de caméra (55),
de telle sorte qu'en sélectionnant successivement plusieurs lentilles (51a) à partir du réseau (51) de lentilles à l'aide de l'ensemble (53) de miroirs galvanométriques et, par le balayage de l'échantillon (M) à l'aide du faisceau laser plan (4) pour chacune de ces lentilles (51a), une image 3D complète de l'échantillon (M) logé dans le caisson (2) est construite.

2. Microscope (1) à fluorescence comprenant un faisceau laser plan selon la revendication 1, dans lequel l'unité (54) de focalisation comprend une première lentille (54a) de transmission qui reçoit, en provenance de l'ensemble (53) de miroirs galvanométriques, la sous-image de l'échantillon (M) et la transmet à une lentille accordable (54b), la lentille accordable (54b) focalisant ladite sous-image, et une deuxième lentille (54c) de transmission qui reçoit en provenance de la lentille accordable (54b) ladite sous-image focalisée et la transmet au capteur de caméra (55) .

3. Microscope (1) à fluorescence comprenant un faisceau laser plan selon l'une quelconque des revendications précédentes comprenant en outre, entre l'unité (54) de focalisation et le capteur de caméra (55), une unité (56) de modulation de lumière spatiale configurée pour corriger des aberrations sphériques de la sous-image de l'échantillon (M).

4. Microscope (1) à fluorescence comprenant un faisceau laser plan selon la revendication 3, dans lequel l'unité (56) de modulation de lumière spatiale comprend une troisième lentille (56a) de transmission qui reçoit en provenance de la deuxième lentille (54c) de transmission la sous-image de l'échantillon (M) et la transmet à un modulateur (56b) de lumière spatiale, le modulateur (56b) de lumière spatiale corrigeant les aberrations sphériques de la sous-image, et une quatrième lentille (56c) de transmission qui reçoit en provenance du modulateur (56b) de lumière spatiale la sous-image avec les aberrations sphériques corrigées et la transmet au capteur de caméra (55).

5. Microscope (1) à fluorescence comprenant un faisceau laser plan selon l'une quelconque des revendications précédentes comprenant en outre un miroir dichroïque (58) disposé derrière la lentille accordable (54b) et configuré pour introduire un faisceau laser externe qui rencontre l'échantillon (M) en suivant un chemin optique inverse à celui suivi par la sous-image de l'échantillon (M).

6. Microscope (1) à fluorescence comprenant un faisceau laser plan selon la revendication 5 comprenant en outre une source de faisceau laser externe orientée vers un deuxième ensemble (59) de miroirs galvanométriques qui dirigent ledit faisceau laser pulsé vers le miroir dichroïque (58).

7. Procédé pour imager des échantillons de grande dimension à l'aide du microscope (1) à fluorescence comprenant un faisceau laser plan selon l'une quelconque des revendications 1 à 2, **caractérisé en ce qu'**il comprend la réalisation des étapes suivantes pour chaque lentille du réseau (51) de lentilles :
- la configuration de l'ensemble (53) de miroirs galvanométriques pour transmettre à l'unité (54) de focalisation une sous-image de l'échantillon (M) collectée par une lentille (51a) sélectionnée ;
- le balayage de l'échantillon (M) à l'aide du faisceau laser plan (4) pour obtenir une sous-image 3D partielle d'une partie de l'échantillon (M) située à l'intérieur du champ de vision (FOV) de la lentille (51a) sélectionnée ; et
- la construction d'une image 3D complète de l'échantillon (M) par la combinaison de la pluralité de sous-images 3D partielles obtenues par chaque lentille (51a),
dans lequel le balayage de l'échantillon (M) à l'aide du faisceau laser plan, comprend, quant à lui, les étapes suivantes :
- l'émission d'un faisceau laser plan (4) à une position sélectionnée le long de la direction d'éclairage (DI) ;
- la transmission à l'unité (54) de focalisation, à l'aide de l'ensemble (53) de miroirs galvanométriques, de la sous-image de l'échantillon (M) collectée par la lentille sélectionnée ;
- la focalisation de la sous-image à l'aide de l'unité (54) de focalisation et la transmission de celle-ci à un capteur de caméra (55) ;
- la répétition de ces opérations pour une pluralité de positions du faisceau laser plan (4) de telle sorte qu'elles couvrent l'ensemble de l'échantillon (M).

8. Procédé pour imager des échantillons de grande dimension selon la revendication 7 comprenant en outre l'étape de correction des aberrations de chaque sous-image focalisée de l'échantillon (M) au moyen d'une unité (56) de modulation de lumière spatiale.

9. Procédé pour imager des échantillons de grande dimension selon l'une quelconque des revendications 7 à 8, comprenant en outre l'étape d'introduction d'un faisceau laser externe qui rencontre l'échantillon (M) en suivant un chemin optique inverse à celui suivi par la sous-image de l'échantillon (M).
